# EUROPEAN PATENT APPLICATION

(11) **EP 3 179 380 A1**
(43) Date of publication of application: **14.06.2017**
(21) Application number: 15306953.9
(22) Date of filing: 08.12.2015
(51) Int. Cl.: G06F 17/30

(54) **METHOD FOR SELECTING AT LEAST ONE ITEM AND CORRESPONDING ELECTRONIC DEVICE, COMPUTER READABLE PROGRAM PRODUCT AND COMPUTER READABLE STORAGE MEDIUM**

(71) Applicant: Thomson Licensing, 92130 Issy-les-Moulineaux (FR)
(72) Inventor: LE GARJAN, Bruno, 35576 Cesson-Sévigné (FR); GENIEUX, Vincent, 35510 Cesson-Sévigné (FR); CHERON, Bruno, 35576 Cesson-Sévigné (FR); MARLEC, Olivier, 35576 Cesson-Sévigné (FR); CHAMPS, François, 35576 Cesson-Sévigné (FR)
(74) Representative: Huchet, Anne

(57) **Abstract**

The present disclosure relates to a method, to be performed in a communication device, for selecting at least one item from a plurality of items in response to a search request based at least partially on at least one item classifier.

According to at least one embodiment, said method comprises, prior to said selecting, a processing of at least one item descriptor describing at least one item of said plurality of items, said processing comprising:
- generating (510) at least one pattern from said item descriptor;
- matching (520) said generated pattern with at least one of said at least one item classifier.

## Description

### 1. Technical field

The present disclosure relates to the field of items selection, notably in a database containing a huge quantity of items.

A method for selecting at least one item and corresponding electronic device, computer readable program product and computer readable storage medium are described.

### 2. Background art

Many electronic devices can give access to an audio and/or visual content (or program, or event), like Set Top Boxes (STB), gateway (GTW), smart phones, personal computers, tablets or smart TV. Such devices often permit a user to tailor access to content, thanks to some content classifiers. Indeed, in case of broadcasted events for instance, the quantity of Information stored by a device in link with forthcoming events can be huge. For example, with the hypothesis of an event having an average duration of 30 minutes, a database storing information related to events being broadcasted on 500 broadcasting channels during three forthcoming weeks, will gather information about more than 500 000 events. Thus offering search queries to a user is needed in order to retrieve relevant contents.

For instance, a search query can give a user the possibility to limit access to a particular content according to a parental rating. A user can also be offered a way of focusing his search on a particular category, or genre, of content (like "sport", "movie", "news" or "radio"), in order for instance to know which sport events are broadcasted on his TV in the forthcoming hours.

However, the content classifiers (for instance textual labels like "sport", "movie", ...) used to define searches from the user interfaces of electronic devices are not standardized and are much varying over devices. Notably, some content classifiers proposed to a user can depend on the manufacturer of the device. For instance, the defined categories of content can differ upon manufacturer. Some content classifiers (like age limits for parental rating) can also depend on the country were the device is expected to be used.

More often, search queries that are based on content classifiers on a user point of view rely in fact internally to content descriptors included in the metadata associated to contents. At the opposite of the device content classifiers, those content descriptors are independent of the device on which the content is to be rendered. They often adhere to a standard of the content descriptor.

For example in the field of Digital Video Broadcasting (DVB), the descriptors associated to a content and received from a broadcast network are contained in an Event Information Table (EIT) as described by the draft version of the European Telecommunications Standards Institute (ETSI) standard EN 300 468 v1.14.1 (2014-01) (http://www.etsi.org/deliver/etsi en/300400 300499/300468/01.14.01_20/en_300468v01140 1a.pdf).

For instance, a category of a content can be expressed by two "content_descriptor" fields related to the event, and the age limit associated to a content is described in the "parental_rating_descriptor" field related to the event.

As a consequence, a content search query performed by a user of an electronic device often involves a complex combination of "ORed" and "ANDed" criteria on the standardized content descriptors. Thus, due to the huge number of stored events, the processing time to perform the query can be noticeable to a user and thus be felt as a drawback by the user.

So, there's a need to provide a solution for performing content search query that is better adapted to user expectation, notably in terms of processing time, compared to prior art solutions.

### 3. Summary

The present principles enable at least one of the above disadvantages to be resolved by proposing a method to be performed in a communication device, for selecting at least one item from a plurality of items in response to a search request based at least partially on at least one item classifier.

According to an embodiment of the present disclosure, said method comprises, prior to said selecting, a processing of at least one item descriptor describing at least one item of said plurality of items, said processing comprising:
- generating at least one pattern from said item descriptor;
- matching said generated pattern with at least one of said at least one item classifier.

According to an embodiment of the present disclosure, said selected item is chosen according to said matched item classifier.

According to an embodiment of the present disclosure, at least one item of said plurality of items is an audiovisual content or an identifier of an audiovisual content.

According to an embodiment of the present disclosure, at least one of said at least one item descriptor and/or item classifier relates to a category of content.

According to an embodiment of the present disclosure, at least one of said at least one item descriptor and/or item classifier relates to a parental rating.

According to an embodiment of the present disclosure, the method comprises receiving said item descriptor from a communication interface of said device.

According to an embodiment of the present disclosure, said item descriptor is received from a broadcast network.

According to an embodiment of the present disclosure, said item descriptor is extracted from at least one signaling information relating to said described item.

According to an embodiment of the present disclosure, said selecting comprises at least one parallel bit matching between at least one item classifier of said search request and at least one matched item classifier.

According to an embodiment of the present disclosure said generating comprises generating said pattern by modifying a reference binary value according to said item descriptor.

According to an embodiment of the present disclosure, said modifying comprises performing a number of bit shifts of said reference binary value, said number depending from said received item descriptor.

The number of shifts can vary according to the size of reference binary value (for instance between 0 to (s-1), with s being the size in bits of the reference binary value).

According to an embodiment of the present disclosure, said matching 530 comprises accessing a configuration table associating each of said item classifier with at least one item descriptor.

According to another aspect, the present disclosure relates to a communication device comprising at least one processor configured for selecting at least one item from a plurality of items in response to a search request based at least partially on at least one item classifier.

According to an embodiment of the present disclosure, said at least one processor is configured for processing, prior to said selecting, at least one item descriptor describing at least one item of said plurality of items, said processing comprising:
- generating at least one pattern from said item descriptor;
- matching said generated pattern with at least one of said at least one item classifier.

While not explicitly described, the communication device of the present disclosure can be adapted to perform the method of the present disclosure in any of its embodiments.

While not explicitly described, the present embodiments related to a selecting method or to the corresponding communication device can be employed in any combination or subcombination. For example, some embodiments of the selecting method can involve items being audiovisual contents, or identifiers of audiovisual contents, and at least one of said at least one item descriptor and/or item classifier can relate to a category of content or a parental rating.

According to another aspect, the present disclosure relates to a non-transitory program storage device, readable by a computer.

According to an embodiment of the present disclosure, said non-transitory computer readable program product tangibly embodies a program of instructions executable by a computer to perform the selecting method of the present disclosure in any of its embodiments.

According to another aspect, the present disclosure relates to a computer readable storage medium carrying a software program comprising program code instructions for performing the method of the present disclosure, in any of its embodiments, when said non transitory software program is executed by a computer.

### 4. List of drawings.

The present disclosure will be better understood, and other specific features and advantages will emerge upon reading the following description, the description making reference to the annexed drawings wherein:
- Figure 1 shows an example of content user presented classifiers and the corresponding DVB content descriptors related to category of content (and the associated classifier and descriptor numerical values);
- Figure 2 shows an example of user presented content classifiers and the corresponding DVB content descriptors related to parental rating (and the associated classifier and descriptor numerical values)
- Figure 3 illustrates a physical structure of a communication device adapted to at least one particular embodiment of the present disclosure;
- Figure 4 is a logical diagram illustrating the exchange inside the communication device of figure 3;
- Figure 5 is a functional diagram that illustrates a particular embodiment of the selecting method of the present disclosure.

It is to be noted that the drawings have only an illustration purpose and that the embodiments of the present disclosure are not limited to the illustrated embodiments.

### 5. Detailed description of the embodiments.

At least one embodiment of the present disclosure offers a new way of selecting an item (for instance a content or a content identifier) by a pre-processing, tailored to the device where the method is implemented, of item descriptors associated to the item, in order to obtain in advance the corresponding item classifiers offered by the user interface of the device for selecting those items, and thus to improve the processing time during the searches about items performed later from this device. The type of items to be selected can differ upon embodiments. Notably, it is to be noted that, in some embodiments, the items can be heterogeneous items of different types (some items being audio items, some other items being images, and still some other items being textual items for instance).

In the embodiments described, the device is a set top box (STB) managing digital video broadcasted programs (or events or contents). It can be adapted notably to process some standardized programs, for instance programs respecting standards published by ETSI or the Advanced Television Systems Committee (ATSC). In the embodiments described, the items to be selected are audio-visual events (or programs or contents) or identifiers of those audio-visual events, like textual labels meaningful for a user.

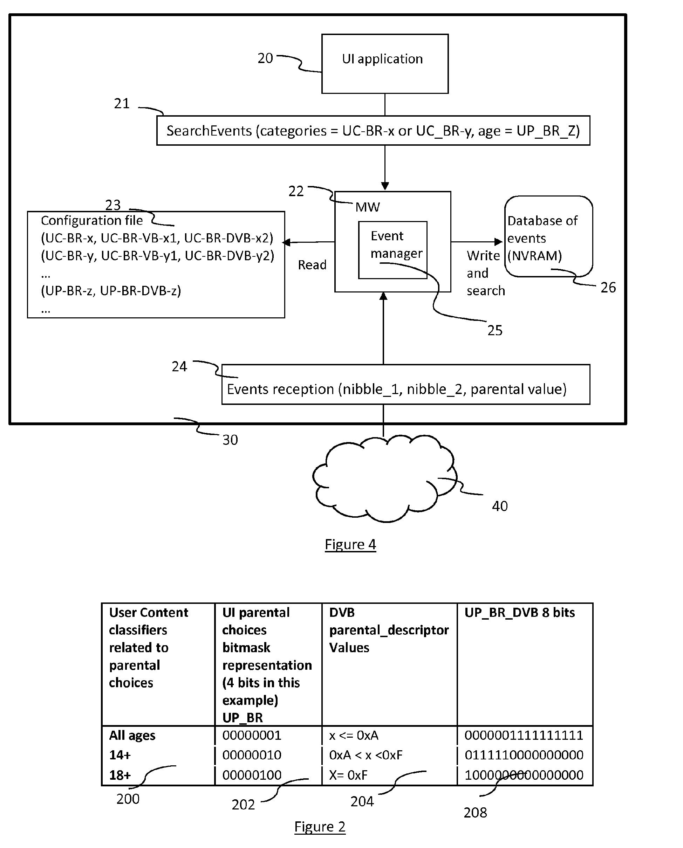

Figure 4 illustrates a particular embodiment where the Set Top Box 30 receives item descriptors (herein event descriptors) from a broadcast network 40. Those item descriptors are contained in information 24 (like EIT) describing an event that are part of the broadcasted signaling information. Such an EIT can include the event name, its duration, its starting time and other event descriptors, like category descriptor or parental rating descriptors. The Set-Top-Box 30 can receive an event and its describing information 24 at the same time, for instance during the broadcasting of the event, or it can receive information 24 describing forthcoming events, that are scheduled to be broadcasted on the communication network. For instance, the broadcasting of the event can be scheduled in the two or three forthcoming weeks.

An event manager 25 in the middleware part 22 of the Set-Top-Box 30 for instance, can process the event and/or the information describing the event and also receives event search queries 21 from a User Interface 20.

In the illustrated embodiment, compliant with the ETSI standard EN 300 468 v1.14.1, the information describing the event are received in an EIT, which can comprise at least one event descriptor that provides classification information about the event. Notably, two fields (or event descriptors) of an EIT are used for describing a category of an event. A first field ("content-nibble-level-1") provides a coarse classification of the event (like "Movie/Drama" for a value "0x1" of the field "content-nibble-level-1 ") and a second field ("content-nibble-level-2") provides a fine classification of the event, inside the first field classification (like "Comedy" for a value "0x4" of the field "content-nibble-level-2" and the value "0x1" of the field "content-nibble-level-1"). In the illustrated embodiment, those two fields are coded in 4 bits. The Event Information Table can also comprise other kinds of event descriptors, like a descriptor related to parental rating that notably can be assigned a rating value, indicating a given minimum age for viewing the event.

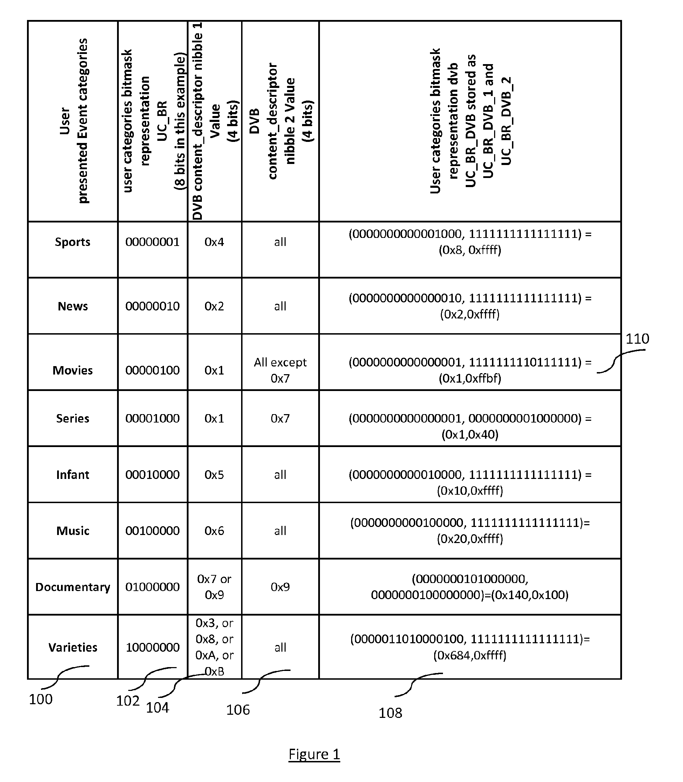

As illustrated by figure 1 or figure 2, the choices offered to the user of the set top box for classifying events are different of the event descriptors contained in the EIT. Notably, a STB category 100, 200 of an event can correspond to several values 104, 204 of an event descriptor, or to one or several values of several event descriptors. For instance, as shown by figure 1, the STB category "Documentary" corresponds to a combination of a first event descriptor "content-nibble-level-1" having a value of "0x7" or "0x9" with a second event descriptor "content-nibble-level-2" having a value of "0x9", and the STB category "Varieties" corresponds to a combination of the first event descriptor "content-nibble-level-1" having a value of "0x3", "0x8", "0xA" or "0xB" with all possible values of the second event descriptor "content-nibble-level-2" (in order to cover content coarse classification "Show/Game show", 'Social/Political issues/Economics"/"Leisure Hobbies" and "Special characteristics").

As illustrated by figure 2, a STB parental rating of "14 years or more" (a designated event assumed to be adapted to viewers being at least 14 years) corresponds to event descriptor DVB parental_descriptor in an EIT having values between "0xA" and "0xF".

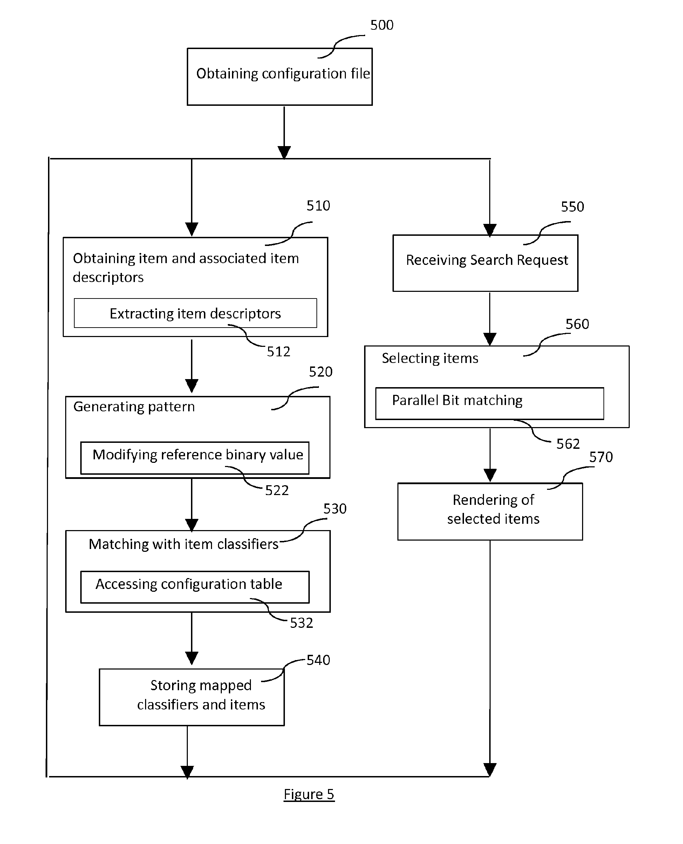

Figure 5 describes the selecting method of a particular embodiment of the present disclosure, compatible with the embodiment of figures 1, 2, 3 and 4. The method is performed in a Set-Top-Box device. The items to be selected are broadcasted events or events identifier in the detailed embodiment.

In the particular embodiment illustrated by figures 4 and 5, the method comprises obtaining 500 a configuration file or table 23 as shown in figure 4 (for instance a static configuration table) defining an association between the STB item (or event) classifiers and item descriptors that can be used to qualify an item.

This configuration table 23 can be stored locally (for instance in the device, as illustrated by figure 4) or can be stored remotely and accessed from a communication network, and/or downloaded, by the device. Notably, in some embodiments, the configuration table can be stored in a Non Volatile Random Access Memory (NVRAM) database (for instance a transactional database like SQLite©) located on the device.

Such an embodiment can permit the configuration table to be independent of programs running on the set top box. For instance, the same configuration table can be downloaded by set top boxes having different versions of software. Such an embodiment can also enable a generic software (e.g. Middleware) to be implemented for several versions of a product. For instance, several STB versions intended to be used in different countries can be equipped with the same software program but with different configuration tables, and each configuration table can take into account legal constraints of each country.

In some other embodiments, the configuration table can be stored in the software application of the Set Top Box (STB) that performs the selecting method. In such an embodiment, the method can comprise an acquiring (not illustrated) of a download request of a new version of the STB application and a downloading (not illustrated) of the STB application. The acquiring and downloading are optional.

As illustrated by figures 1 and 2, each item classifier is a label 100, 200 (for instance a textual value (like "sports") meaningful to a user of the STB), that can also be represented by a numerical value 102 UC-BR, 202 UP-BR, called herein a "classifier numerical value". In the particular embodiment described, the length of the classifier numerical value, when expressed in bits, is equal or greater to the number of item classifiers defined. Indeed, such a length permits use of the classifier numerical value as a bit mask, as it will be explained more completely hereinafter. For instance, In the embodiment illustrated by figure 1 and 2, where 8 different category item classifiers are defined, each classifier numerical value 102 of an item classifier is an eight bit length value, composed of seven bits having the value "0" and one unique bit having the value "1", located at a different position (or rank) in the classifier numerical value.

In the configuration table, each item classifier is associated to at least one descriptor numerical value 108, 208, each representing corresponding values 104, 106, 204 of an item descriptor, as illustrated by figures 1 and 2. The configuration table can thus notably comprise a plurality of n-tuples, associating each classifier numerical value 102, 202 (UC-BR) of an item classifier to descriptor numerical values 108, 208 (UC_BR_DVB_1 and UC_BR_DVB_2 as illustrated by figure 1 or UP_BR_DVB, as illustrated by figure 2) each representing corresponding value of a given item descriptor 106, 206.

According to the embodiment illustrated in figure 1, the configuration table contains 3-tuples (UC_BR, UC_BR_DVB_1, UC_BR_DVB_2), where each item classifier numerical value 102 (UC_BR) is associated with a pair 108 (UC-BR-DVB) of descriptor numerical values (UC_BR_DVB_1, UC_BR_DVB_2) representing corresponding values of a given pair (nibble 1, nibble 2) of item descriptors. Similarly, for item classifiers that correspond to the values of a unique item descriptor (like for parental rating as illustrated by figure 2), the configuration table can comprise 2-tuples (UP_BR, UP_BR_DVB) where:
- UP_BR is the classifier numerical value that identify the item classifier if the STB;
- UP_BR-DVB is the descriptor numerical value representing the corresponding item descriptors of the item classifier.

According to another embodiment, the configuration table can contain association between a classifier numerical value of an item classifier (labeled "adult movie" for instance) and a first descriptor numerical value of a category item descriptor, like the coarse category item descriptor "nibble-1" (having the value "0x1" for instance), and a second descriptor numerical value of a parental rating descriptor (having the value "0xA" for instance).

In the embodiment by illustrated figures 1 and 2, a given item descriptor is assigned a hexadecimal value, between 0x1 and 0xF (and thus can takes 16 different values). The descriptor numerical value representing values of the given item descriptor corresponding to a particular item classifier is coded on 16 bits, in order to attribute a bit to all possible values of the item descriptor and thus to make a distinction between all possible combination of values. Of course the length of the classifier and descriptor numerical values can vary in different embodiments.

When an item classifier corresponds to a unique value k (like "0x4") of an item descriptor, the descriptor numerical value representing the item classifier is assigned a value corresponding to 16 bit length binary number with all bits at "0" except the bit of rank k (like "0000 0000 0000 1000" when k=0x4).

When an item classifier corresponds to several values k1, ..., kn of an item descriptor (as illustrated by element 104 of figure 1), the descriptor numerical value representing the item classifier is assigned a value corresponding to 16 bit length binary number with all bits at "0" except the n bits of rank k1,..,kn that are assigned the value "1" (as illustrated by the part of element 108 of figure 1 relating to the representing numerical value UC_BR_DVB_1).

When an item classifier corresponds to all possible values of an item descriptor (as illustrated by element 106 of figure 1, the descriptor numerical value representing the item classifier is assigned a value corresponding to 16 bits length binary number with all bits at "1" (as illustrated by the part of element 108 of figure 1 relating to the representing numerical value UC_BR_DVB_2).

When an item classifier corresponds to all possible values of an item descriptor, except values k1,..,kn, the representing descriptor numerical value (UC_BR_DVB_1 or UC_BR_DVB_2) is assigned a value corresponding to 16 bit length binary number with all bits at "1", except bits of rank k1, .. , kn that are assigned the value "0" (as illustrated by the part of element 110 of figure 1 relating to the representing numerical value UC_BR_DVB_2).

Depending upon embodiments, the obtaining 500 of the configuration table can be performed when the application that performs the method of the present disclosure is launched (for instance during an initialization step for instance) or later, for instance during a matching 530, that will be described hereinafter.

As illustrated by figure 5, the method comprises obtaining 510 at least one item descriptor (and optionally the item itself).

Depending upon embodiments, the item and its associated descriptors can be obtained from storage means external to the device (like an external hard disc, an USB key or a Compact Disc, an NFC tag), from storage means comprised in the device (like a RAM memory or an internal database), or thanks to a communication interface of the device. For instance, in the illustrated embodiment of figure 4, the items and the item descriptors are received from a broadcast network.

In some embodiments, as illustrated by figure 5, the obtaining 510 of at least one item descriptor can comprise extracting 512 the item descriptor from some complete information obtained by the device. For instance, in an embodiment where some items are audiovisual contents and/or identifiers of audiovisual contents, the item descriptors describing those items can be extracted from Event Information Tables (EIT) contained in the signaling information received from the broadcast network.

In a variant, when an EIT of an item does not contain a particular item descriptor (like a parent rating content descriptor) that can be needed for potential forthcoming searches, this particular item descriptor can be assigned a default value (for instance an average value or a minimal or maximal value of this item descriptor).

As shown by figure 5, the method comprises generating 520 a pattern from the obtained item descriptors. The pattern can notably be a bit pattern that will be used as a bit mask.

As illustrated, the generating 520 can comprise obtaining the pattern by modifying 522 a reference value (for instance the reference value "1" as in the illustrated embodiment of figure 1 or 2) according to the obtained item descriptor, the pattern being assigned the value of the modified reference value.

The modifying can notably comprise zero or more bit shifts of the reference value, expressed in a binary format (for instance an eight bits length value) the number of bit shifting performed depending from the obtained item descriptor.

For instance, in the illustrated embodiment, the reference value "1" is applied n bit shifts, with n being the value of the obtained item descriptor, in hexadecimal format, minus 1. In such an embodiment, the reference value is expressed by a number of bits chosen according to the possible values of the item descriptor. The pattern generated for the item descriptor can be assigned the value "patternValue", expressed in binary format by: patternValue = (1 << (n - 1))
As an example, for an item descriptor having a hexadecimal value "0x7", the generated pattern will be assigned the following value:
patternValue = 1 << (0x7-1) = b01000000 = 0x40.
For an item descriptor having a hexadecimal value "0xA" (like an event descriptor related to parental rating), the generated pattern will be assigned the value:
patternValue = 1 << (0xA-1) = b00000010 = 0x20.

Similarly, for a pair of item descriptors (nibble_1, nibble_2) (defining a category of events for instance), a pair of patterns (EC_BR_DVB_1, EC_BR_DVB_2) can be generated with:
- EC_BR_DVB_1 = 1<< (nibble_1 -1)
- EC_BR_DVB_2 = 1<< (nibble_2 -1)

According to another embodiment, a single pattern can be generated for several item descriptors describing the same item. For instance, a pattern E-UCP-BR being a 16 bit long pattern can be generated by concatenating together an 8 bit length pattern related to a first category item descriptor, and an 8 bit length pattern related to a second parental rating item descriptor.

According to figure 5, the method comprises matching 530 the generated pattern with at least one item classifier used by the user interface of the device 30 (see figure 4).

As illustrated, the matching 530 can comprise accessing 532 the obtained configuration table in order to find at least one classifier numerical value (UC_BR or UP_BR) associated to at least one descriptor numerical value that matches the at least one generated pattern. In the illustrated embodiment of figure 1, if the generated patterns are named EC_BR_DVB_1 and EC_BR_DVB_2, a matching classifier numerical value is a classifier numerical value UC-BR for which the following condition is true:
(UC_BR_DVB_1 & EC_BR_DVB_1 !=0) &&
(UC_BR_DVB_2 & EC_BR_DVB_2 != 0)
Where UC_BR_DVB (UC_BR_DVB-1, UC_BR_DVB-2) is the pair of descriptor numerical values associated in the configuration table to the classifier numerical value UC-BR.

Similarly, in the illustrated embodiment of figure 2, if the generated pattern is named EP_BR_DVB, a matching classifier numerical value is a classifier numerical value UP-BR for which the following condition is true:
(UP_BR_DVB & EP_BR_DVB !=0)
where UP_BR_DVB is the descriptor numerical value associated in the configuration table to the classifier numerical value UP-BR.

The generated pattern can consequently being matched with item classifier (or label), as known by a user, represented by a matching classifier numerical value.

According to figure 5, the method also comprises storing 540 the matching classifier numerical value, or the item classifier represented by the matching classifier numerical value, in association with the obtaining item. The matching item classifiers and the obtained items can notably be stored in an NVRAM database 26 (for instance a transactional database like SQLite), as illustrated by figure 4. For instance, an item can be an occurrence of an SQL table "itemsTable" that contains fields for matching item classifiers. In some embodiment, the storing 540 can also comprise storing at least one item descriptor related to the obtained item. In other embodiments, no item descriptors are stored together with the items.

In an embodiment where the items and the item descriptors are obtained from a first database, the storing can consist of an addition of the matching item classifiers to the item as stored in the first database, or in a storing in a second database of the items and their matching item classifiers.

As illustrated by figure 5, the method can comprise receiving 550 a search request from a user interface of the device 30 (shown in figure 4), relating to at least one item (for instance an event or an event identifier, like a textual label). This search request is expressed by means of the STB item classifiers as already explained. For instance, the request is a query about events having an item classifier being "label-x" or "label-y", those item classifiers being respectively represented internally by classifier numerical values UC_BR-x or UC_BR-y.

In the particular embodiment described, the method comprises selecting 560 items that has been previously pre-processed and stored (by the obtaining 510, the generating 520, the matching 530 and the storing 540) thanks to their at least one matching item classifiers. Indeed, the selection of items having an item classifier being UC_BR-x or UC_BR-y can be expressed as:
(UC_BR-x | UC_BR_y) & EC_UC_BR !=0
where EC_UC_BR is an n-tuple concatenating matching classifier numerical values stored in association with the item (in an NVRAM database for instance).
Such test can be performed, as illustrated by figure 5, by a parallel bit matching 562. Similarly, a search criteria relating to items having a parental rating item classifier represented by a classifier numerical value UP_BR-z can be expressed as
(UP_BR-z & E_UP_BR) != 0)
where EC_UP_BR is an n-tuple concatenating matching classifier numerical values stored in association with the item.

According to another embodiment, a search criteria relating to a search of items having a category represented either by the classifier numerical value UC_BR-x or by the classifier numerical value UC_BR-y and parental rating represented by the classifier numerical value UP_BR-z can be expressed as:
(((UC_BR-x | UC_BR-y) & (E_UCP_BR>>16)) !=0) &&
(UP_BR-z & (E_UCP_BR & 0xFFFF) !=0)
where EC_UP_BR is an n-tuple concatenating matching classifier numerical values (relating to category and parental rating notably) stored in association with the item.

The criteria of the above tests can be expressed in terms of simple queries to a transactional database. Furthermore, they can be implemented by parallel bit matching. Thus, in at least some embodiments, the processing time of a select request can be improved, compared to prior art solutions with no pre-processing performed at the time of the obtaining of an item.

It is also to be noted that because of the preprocessing that permits direct searches in terms of item classifiers, in at least some of the embodiments of the present disclosure, each search request can have a processing time proportional to its complexity at the point of view of a user of the STB. Notably, all searches involving a same number of item classifier can have similar processing time (even if they rely internally on a different numbers of item descriptors).

In the particular embodiment illustrated by figure 5, the method also comprises rendering 570 the selected items. In the particular case where the item is an identifier of an audiovisual content, the rendering can comprise a rendering of elements extracted from or related to the audiovisual content, like a textual label (for instance the title of the content), a visual label (like a visual label of a company that participates to the elaboration of the content), an audio and/or video element extracted of the content, a picture related to the audiovisual content (like the image of an audio album, an image extracted from a movie, a picture of a character of a movie, a picture of a sport team, or a picture of a speaker of a show, ...)..

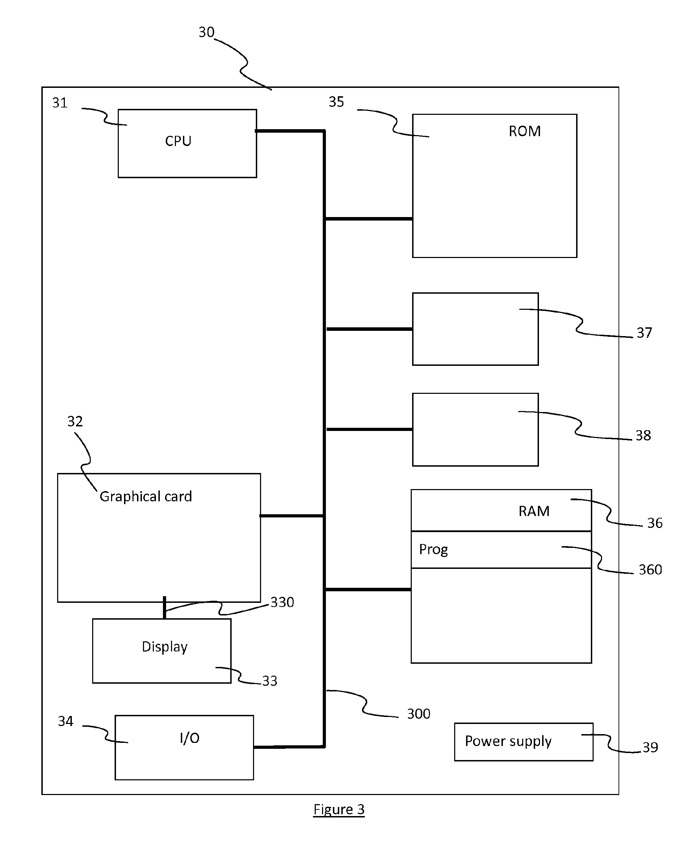

**Figure 3** describes the structure of a communication device 30 adapted notably to the execution of the selecting method of the present disclosure.

In the particular embodiment of figure 3, the communication device 30 can include different devices, linked together via a data and address bus 300, which can also carry a timer signal. For instance, it can include a micro-processor 31 (or CPU), a ROM (or « Read Only Memory ») 35, a RAM (or « Random Access Memory ») 36.

The communication device can also comprise a graphics card 32 (depending on embodiments, such a card may be optional), and/or at least one Input/ Output module 34, (like a keyboard, a mouse, an LED, and so on), this graphic card and/or Input/ Output module is optional.

In the particular embodiment of figure 3, the communication device can also comprise communication interfaces 37 configured for the reception and/or transmission of data, via a wireless connection (notably of type WIFI® or Bluetooth), wired communication interfaces 38 (optional), a power supply 39. Those communication interfaces are optional.

In some embodiments, the communication device 30 can also include, or be connected to, a display module 33, for instance a screen, directly connected to the graphics card 32 by a dedicated bus 330.This display is optional.

In the illustrated embodiment, the communication device 30 can communicate with another device thanks to a wireless interface.

Each of the mentioned memories can include at least one register, that is to say a memory zone of low capacity (a few binary data) or high capacity (with a capability of storage of a whole program or of all or part of data representative of data to be calculated or displayed).

When the communication device 30 is powered on, the microprocessor 31 loads the program instructions 360 in a register of the RAM 36, notably the program instruction needed for performing at least one embodiment of the monitoring method described herein, and executes the program instructions.

According to a variant, the communication device 30 includes several microprocessors. According to another variant, the power supply 39 is external to the electronic device 30.

In the particular embodiment illustrated in figure 3, the microprocessor 31 can be configured for selecting at least one item from a plurality of items in response to a search request based at least partially on at least one item classifier.

In the particular embodiment described, the at least one processor is configured for processing, prior to said selecting, at least one item descriptor describing at least one item of said plurality of items, said processing comprising:
- generating at least one pattern from said item descriptor;
- matching said generated pattern with at least one of said at least one item classifier;
- storing said matched item classifier in association with said described item.

The present disclosure has been described mainly in relation with DVB content descriptors related to category of contents or to parental rating of contents received in broadcasted signalization information. Of course, as it will be understandable for a person skilled in the art, the present disclosure can also be applied to others content descriptors, notably descriptors fulfilling other standards than DVB or received from different kind of networks.

More generally, the principles of the present disclosure can be applied to any other databases searching for which there is not a "one to one" relation between properties of items of information, as collected by a device, and criteria used for search queries related to those items of information.

As will be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it will be appreciated by those skilled in the art that the block diagrams presented herein represent conceptual views of illustrative system components and/or circuitry of some embodiments of the present principles. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

## Claims

1. Method, to be performed in a communication device, for selecting at least one item from a plurality of items in response to a search request based at least partially on at least one item classifier, said method being **characterized in that** it comprises, prior to said selecting, a processing of at least one item descriptor describing at least one item of said plurality of items, said processing comprising:
- generating (510) at least one pattern from said item descriptor;
- matching (520) said generated pattern with at least one of said at least one item classifier.

2. A selecting method according to claim 1 **characterized in that** said selected item is chosen according to said matched item classifier.

3. A selecting method according to claim 1 or 2 **characterized in that** at least one item of said plurality of items is an audiovisual content or an identifier of an audiovisual content.

4. A selecting method according to claim 3 **characterized in that** at least one of said at least one item descriptor and/or item classifier relates to a category of content.

5. A selecting method according to claim 3 or 4 **characterized in that** at least one of said at least one item descriptor and/or item classifier relates to a parental rating.

6. A selecting method according to any of claims 1 to 5 **characterized in that** it comprises receiving said item descriptor from a communication interface of said device.

7. A selecting method according to any of claims 1 to 6 **characterized in that** said item descriptor is received from a broadcast network.

8. A selecting method according to any of claims 1 to 7 **characterized in that** said item descriptor is extracted from at least one signaling information relating to said described item.

9. A selecting method according to any of claims 2 to 8 **characterized in that** said selecting 550 comprises at least one parallel bit matching between at least one item classifier of said search request and at least one matched item classifier.

10. A selecting method according to any of claims 1 to 9 **characterized in that** said generating (520) comprises generating said pattern by modifying (522) a reference binary value according to said item descriptor.

11. A selecting method according to any of claim 10 **characterized in that** said modifying (522) comprises performing a number of bit shifts of said reference binary value, said number depending from said received item descriptor.

12. A selecting method according to any of claims 1 to 11 **characterized in that** said matching (530) comprises accessing a configuration table associating each of said item classifier with at least one item descriptor.

13. Communication device comprising at least one processor configured for selecting at least one item from a plurality of items in response to a search request based at least partially on at least one item classifier, said communication device being **characterized in that** it said at least one processor is configured for processing, prior to said selecting, at least one item descriptor describing at least one item of said plurality of items, said processing comprising:
- generating (510) at least one pattern from said item descriptor;
- matching (520) said generated pattern with at least one of said at least one item classifier.

14. A non-transitory computer readable program product, **characterized in that** it comprises program code instructions for performing the selecting method according to at least one of claims 1 to 10, when said non-transitory software program is executed by a computer.

15. Computer readable storage medium carrying a software program **characterized in that** it comprises program code instructions for performing the selecting method according to at least one of claims 1 to 10, when said non-transitory software program is executed by a computer.
